# EUROPEAN PATENT APPLICATION

(11) **EP 4 800 398 A1**
(43) Date of publication of application: **02.09.2026**
(21) Application number: 25869625.1
(22) Date of filing: 24.04.2025
(51) Int. Cl.: G01P 15/03

(54) **WIDE-TEMPERATURE HIGH-PRECISION OPTICAL ACCELERATION SENSITIVE CHIP BASED ON PRINCIPLE OF MICROCAVITY INTERFEROMETER, SENSOR, AND MANUFACTURING METHOD FOR WIDE-TEMPERATURE HIGH-PRECISION OPTICAL ACCELERATION SENSITIVE CHIP**

(30) Priority: 03.01.2025 CN 202510005267
(71) Applicant: Shanghai Baiantek Sensing Technology Co., Ltd., Shanghai 201210 (CN); Shanghai Baiantek Semiconductor Co., Ltd., Shanghai 201816 (CN)
(72) Inventor: ZHONG, Shaolong, Shanghai 201201 (CN); GUO, Zhihui, Shanghai 201201 (CN); LONG, Liang, Shanghai 201201 (CN); ZHOU, Wei, Shanghai 201201 (CN); GUO, Liangjie, Shanghai 201201 (CN)
(74) Representative: Elzaburu S.L.P.
(86) International application number: PCT/CN2025/091042
(87) International publication number: WO 2026/143916

(57) **Abstract**

Disclosed are a wide-temperature-range high-precision optical acceleration sensitive chip based on a microcavity interferometer principle and a manufacturing method thereof, and a sensor. The wide-temperature-range high-precision optical acceleration sensitive chip includes a first substrate, a second substrate, and a third substrate, where an optical fiber mounting seat and a light through hole are processed on the first substrate, a beam structure and an inertial mass block are processed on the second substrate, the first substrate, the second substrate, and the third substrate are all double-surface-polished ultraflat silicon wafers, a single-mode optical fiber assembly is fixed to the optical fiber mounting seat, an end surface of the single-mode optical fiber assembly is ground precisely and perpendicular to an axial direction of an optical fiber core, a first cavity mirror is formed on an end surface of a side, facing the light through hole, of the inertial mass block, a second cavity mirror is formed on the end surface of the single-mode optical fiber assembly, an F-P interference cavity is formed by the first cavity mirror and the second cavity mirror, and the first substrate, the second substrate, and the third substrate are connected through a silicon-silicon bonding process.

## Description

### TECHNICAL FIELD

The present application overall relates to the technical field of optoelectronics, in particular to a wide-temperature-range high-precision optical acceleration sensitive chip based on a microcavity interferometer principle and a manufacturing method. The wide-temperature-range high-precision optical acceleration sensitive chip is mainly used for measuring acceleration of objects, which is applied to the technical fields such as inertial navigation, vibration, and measurement of dip angles.

### BACKGROUND ART

An acceleration sensor is mainly applied to inertial navigation, vibration, and measurement of dip angles. In the industrial field, the acceleration sensor can be widely used to collect signals such as vibration amplitudes, frequencies, and phases of large structures and electromechanical equipment, and can further achieve recognition of abnormal states and predictive health management in combination with algorithms. In the industrial field, more stringent requirements are put forward for the acceleration sensor in terms of electrical pressure insulation performance, lightning strike and electromagnetic interference resistance capacity, ultra-low and ultra-high temperature operation capacity, and wideband response capacity from ultra-low frequency to medium-high frequency. For example, in large-scale equipment such as nuclear power units, wheel rails and pantographs in rail transportation, mining machinery, wind turbine blades, ocean vessels, and power units, the acceleration sensor is required to achieve electrical insulation, radiation resistance, electromagnetic interference resistance, extreme high and low temperature resistance, ultra-high precision, and large acceleration impact resistance.

Commonly used acceleration sensors can be classified into electrical detection acceleration sensors and optical detection acceleration sensors. The electrical detection acceleration sensor measures inertial force or displacement of a mass block by an electromechanical method, while the optical detection acceleration sensor measures the inertial force or displacement of the mass block through optical signals. Compared with the former, the optical detection acceleration sensor not only has the incomparable unique advantages of electromagnetic interference resistance, but also is small in size, light in weight, wide in dynamic range, and high in precision, and can work in harsh environments such as high temperature and high humidity. To increase a transmission distance and improve electromagnetic interference resistance capacity, the optical detection acceleration sensor typically adopts optical fibers as a signal transmission means.

By adopting locally processed optical fibers or entire optical fibers as sensing and transmission elements, traditional intrinsic optical fiber sensors are naturally suitable for harsh industrial environments. However, due to constraints of many factors such as the stable elastic properties of materials of the optical fibers and packaging structures, temperature drift and stress drift introduced by a temperature coefficient difference between the optical fibers and the packaging structures, and the available spectral range of a light source, the optical fiber sensor cannot achieve the precision of piezoelectric or even capacitive acceleration sensors within a wide temperature range. Meanwhile, the existing optical fiber sensors are significantly affected by temperature cross-influence, with poor measurement repeatability and consistency among sensors, which are impossible to achieve industrialized and mass production with consistent quality.

Monocrystalline silicon features excellent constant elasticity and a relatively low coefficient of thermal expansion, making it an ideal material for manufacturing mechanical structures and inertial mass block-elastic beam combined acceleration sensitive structures. Especially with the development of a micro-electromechanical system (MEMS) micro-nano manufacturing process, electrical signals are read out by manufacturing a sensor sensitive chip from a monocrystalline silicon wafer and manufacturing resistors, capacitors or resonators in an integrated manner, and MEMS batch manufacturing with high consistency of mechanical sensors such as pressure sensors, acceleration sensors, and sound sensors has been achieved. Chinese patents CN115728512A and CN115728511A disclose an optical fiber acceleration sensor. A first reflecting layer is deposited on a silicon-on-insulator (SOI) silicon wafer, and a second reflecting layer (polished glass wafer) is deposited on a third substrate. This acceleration sensor is an MEMS optical acceleration sensor manufactured based on a silicon-glass bonding structure. A sufficient gap must be reserved to prevent the situation that relative displacement capacity between an inertial sensitive structure and a substrate is lost due to attraction between silicon and glass under high bonding voltage, leading to failure in the acceleration sensor, such that it is difficult to adjust damping characteristics of the MEMS optical acceleration sensor by reducing the gap between the inertial sensitive structure and the substrate. The temperature resistance of glass is limited, further narrowing the operating temperature range of the MEMS optical acceleration sensor. Meanwhile, an optical interference cavity is manufactured or the inertial sensitive structure is formed by using the SOI silicon wafer, leading to higher costs thereof. It is difficult to ensure long-term reliability and high-temperature resistance capacity through adhesion or low-temperature glass welding between an optical fiber in this sensor and the MEMS sensor sensitive chip.

### SUMMARY

The present application provides a wide-temperature-range high-precision optical acceleration sensitive chip based on a microcavity interferometer principle and a manufacturing method thereof in order to overcome the defects of optical fiber acceleration sensors in the prior art. The wide-temperature-range high-precision optical acceleration sensitive chip includes a first substrate, a second substrate, and a third substrate, where an optical fiber mounting seat and a light through hole are processed on the first substrate, a beam structure and an inertial mass block are processed on the second substrate; the first substrate, the second substrate, and the third substrate are all double-surface-polished ultraflat silicon wafers; a single-mode optical fiber assembly is fixed to the optical fiber mounting seat, an end surface of the single-mode optical fiber assembly is ground precisely and perpendicular to an axial direction of an optical fiber core, a first cavity mirror is formed on an end surface of a side, facing the light through hole, of the inertial mass block, a second cavity mirror is formed on the end surface of the single-mode optical fiber assembly, a Fabry-Perot (F-P) interference cavity is formed by the first cavity mirror and the second cavity mirror, and the first substrate, the second substrate, and the third substrate are connected through a silicon-silicon bonding process. The first cavity mirror is formed on the end surface of the side, facing the light through hole, of the inertial mass block. By means of the characteristics of good surface smoothness and flatness of the double-surface-polished ultraflat silicon wafers and high optical reflectivity of monocrystalline silicon, the reflectivity of the double-surface-polished ultraflat silicon wafers for lasers of 1,500 nm-1,600 nm exceeds 25%. The double-surface-polished ultraflat silicon wafer is directly adopted as the first cavity mirror of the F-P optical interference cavity, and the end surface of the single-mode optical fiber assembly that is ground precisely and perpendicular to the axial direction of the optical fiber core is adopted as the second cavity mirror of the F-P optical interference cavity. Due to a divergence angle of light signals after leaving the end surface of the single-mode optical fiber assembly, after lasers emitted from the second cavity mirror of the F-P optical interference cavity are reflected by the first cavity mirror of the F-P optical interference cavity, only a very small part of the lasers can return to the second cavity mirror of the F-P optical interference cavity along an original path and enter a single-mode optical fiber, ensuring that the two cavity mirrors of the F-P optical interference cavity can be strictly parallel and aligned and ensuring that the first cavity mirror maintains the F-P optical interference cavity in a state where not only are double-beam interference conditions met, but also spectral characteristics such as insertion loss and contrast can always remain approximately constant during large displacement of the inertial mass block. To-be-measured acceleration can be converted into inertial displacement of the mass block, so as to change an interference light path between the first cavity mirror and the second cavity mirror of the F-P optical interference cavity, thereby obtaining acceleration information through calculation. The three double-surface-polished ultraflat silicon wafers are adopted. After each silicon wafer is graphically etched, optical acceleration sensitive chips are manufactured in batches through the silicon-silicon bonding process, which eliminates thermal stress mismatch introduced by heterogeneous aggregation of wafers, reduces the temperature coefficient of the chip, and increases the overall high temperature resistance of the chip to 500°C or above. Meanwhile, SOI silicon wafers are replaced with the double-surface-polished ultraflat silicon wafers, material costs of the sensors are significantly reduced, meanwhile, coating on the inertial mass block is reduced, the manufacturing process of the sensors is simplified, and the production cost of the sensors is further reduced.

In a further embodiment, an optical reflecting film is plated on the end surface of the single-mode optical fiber assembly to adjust and control the spectral characteristics of the F-P optical interference cavity. For example, double-beam interference spectral characteristics are improved by plating an optical reflecting film with the reflectivity of 1%-20%. In a further preferred embodiment, the reflectivity of the optical reflecting film is selected to be less than that of surfaces of the second substrate, such that two beams of interference light reflected back to the optical fiber by the first cavity mirror and the second cavity mirror have the same light intensities, and respective light intensities thereof are both 12%, thereby achieving an optimum double-beam interference effect.

In a further embodiment, the inertial mass block is connected to the second substrate through the beam structure, and the beam structure is a double-layer elastic beam. The structure of the double-layer elastic beam may adopt the applicant's previous prior art or other beam structures capable of achieving elastic connection of the inertial mass block in the prior art. The double-layer elastic beam structure includes an upper elastic beam and a lower elastic beam, an upper surface of the upper elastic beam is flush with an upper surface of the second substrate, and a lower surface of the lower elastic beam is flush with a lower surface of the second substrate. Due to this arrangement, the second substrate is easy to process and achieve, and front and reverse surfaces of the second substrate are both natural surfaces, thereby improving the light path effect. A surface of the beam structure is not treated with processes, the symmetry between beam structures with the same surfaces and beam structures with front and reverse surfaces is improved, and the effect of paraxial suppression is optimized.

In a further preferred embodiment, the first cavity mirror is parallel to the second cavity mirror, and the two beams of interference light reflected back to the optical fiber by the two cavity mirrors of the F-P optical interference cavity have the same light intensities, the respective light intensities thereof are both lower than 5%-20% of an incident light intensity, thereby ensuring that the optical acceleration sensitive chip has good double-beam interference spectral characteristics, and a measurement precision of 1×10⁻⁴ of the change of the interference light path between the first cavity mirror and the second cavity mirror of the F-P optical interference cavity within the chip is achieved based on a laser interference signal demodulation principle. Meanwhile, it is also ensured that the F-P optical interference cavity within the optical acceleration sensitive chip has good stability and transverse vibration interference resistance capacity. Further preferably, according to simulation results, when the two beams of interference light reflected back to the optical fiber by the two cavity mirrors of the F-P optical interference cavity have the same light intensities and the respective light intensities thereof are both lower than or equal to 20% of the incident light intensity, good sinusoidal signals are formed by reflected light, demodulation is conveniently performed in subsequent algorithms, and acceleration information can be efficiently obtained through calculation.

In a further preferred embodiment, an upper gap is formed by etching on a surface, facing the second substrate, of the first substrate, a lower gap is formed by etching on a surface, facing the second substrate, of the third substrate, and depths of the upper gap and the lower gap are 3 µm-20 µm. By controlling the etching depths of the upper gap and the lower gap, damping characteristics of the optical acceleration sensitive chip are adjusted, and limiting protection is provided for the inertial mass block, thereby preventing the elastic beam from being broken due to too large displacement of the inertial mass block under the action of high impact. Since the three substrates are subjected to silicon-silicon bonding, there is no need to worry about attraction between the inertial mass block and a surface of the upper gap caused by too small gaps on the basis of ensuring bonding intensity, the depths of the gaps can be freely adjusted accordingly, and it is ensured that the optical acceleration sensitive chip has an optimum damping ratio similar to 0.707, such that nonlinear phenomena are effectively inhibited, signal distortion is reduced, and system maintenance staff are assisted to know signal or channel status. Meanwhile, the upper gap and the lower gap can provide limiting protection for the inertial mass block under high impact overload against irreversible deformation of the beam structure caused by excessive displacement of the inertial mass block. The maximum free displacement stroke of the inertial mass block can be set through the upper gap and the lower gap to design and adjust the rigidity of the beam structure accordingly, the measurement sensitivity and dynamic range of the optical acceleration sensitive chip are maximized, and there is no need to worry about breakage of the elastic beam under high impact overload. A specific design parameter is adopted as an example. A first-order natural resonant frequency of an optical acceleration sensitive chip is 16 KHz. Under the action of ±200 g acceleration, the maximum displacement of the inertial mass block is ±0.2 µm, that is, the cavity length corresponding to an F-P optical interference cavity inside the chip is ±0.2 µm. The minimum cavity length of the F-P optical interference cavity that can be measured based on a laser interference signal demodulation principle is 10 pm. Thus, it is ensured that the optical acceleration sensitive chip achieves high resolution of 5×10⁻⁵ of a full scale and linear precision of 1×10⁻⁴ by adopting a laser interference signal demodulation method.

In a further preferred embodiment, the optical fiber mounting seat is a stepped hole with a first step portion and a second step portion. The single-mode optical fiber assembly includes a glass sleeve on an outer layer and a single-mode optical fiber on a core portion, the first step portion, the second step portion, an end surface of the glass sleeve, and an end surface of the single-mode optical fiber are all perpendicular to a core shaft of the single-mode optical fiber, the first step portion and the end surface of the glass sleeve are in first fitting, the second step portion and the end surface of the single-mode optical fiber are in second fitting, and the single-mode optical fiber assembly is fixed to the optical fiber mounting seat through solder glass. Further preferably, a distance between the end surface of the glass sleeve and the end surface of the single-mode optical fiber is set as a first distance, a distance between the first step portion and the second step portion is set as a second distance, the first distance is less than the second distance, and a difference between the first distance and the second distance is 5-20 µm. By means of the first fitting and the second fitting, the first cavity mirror and the second cavity mirror are maintained strictly parallel, thereby preventing the technical problem that the first cavity mirror and the second cavity mirror are not parallel due to thermal stress caused by temperature change.

In a further preferred embodiment, a counterbored hole is processed in a side, facing away from the second substrate, of the third substrate, and a diffusion hole penetrating through the third substrate is formed in a bottom of the counterbored hole. An optical anti-reflection film is arranged at a position, corresponding to the diffusion hole, of the second substrate. Therefore, specular reflection of the second substrate is reduced, preventing reflected light from the second substrate from returning to the F-P optical interference cavity, and preventing multi-interface reflected light introduced from the third substrate from influencing the optical performance of the F-P optical interference cavity. Further preferably, a light-absorbing material is arranged in the counterbored hole, and covers a bottom wall and a periphery of the counterbored hole, further reducing the reflected light.

The wide-temperature-range high-precision optical acceleration sensitive chip based on the microcavity interferometer principle is based on an F-P interference principle: when three beams of light with wavelengths of λ1, λ2, and λ3 respectively are incident into the acceleration sensor chip, the reflected light of the first cavity mirror and the second cavity mirror can form double-beam interference corresponding to the three wavelengths due to the same reflection intensity and the presence of a light path difference. Under the action of external acceleration or vibration, the relative distance between the first cavity mirror and the second cavity mirror changes, that is, the light path difference between two beams of double-beam interference changes, a phase of the interference light returning to the collimator changes accordingly, thus, the three ways of interference output signals are converted into voltage signals f1, f2, and f3 by a photodiode, and finally, information of to-be-measured acceleration is obtained through calculation.

The present application further relates to an acceleration sensor, including the above wide-temperature-range high-precision optical acceleration sensitive chip based on the microcavity interferometer principle.

The present application further relates to a manufacturing method of the wide-temperature-range high-precision optical acceleration sensitive chip based on the microcavity interferometer principle, including the following steps; S1. an inertial mass block and a beam structure are formed on a second substrate through a processing process, where the processing process includes photolithography, dry etching, wet etching, or other MEMS micro-nano processing process; S2. an optical fiber mounting seat, a light through hole, and an upper gap are manufactured on a first substrate through the processing step; and S3. a lower gap, a counterbored hole, and a diffusion hole are manufactured in a third substrate through the processing process, where the steps S1, S2, and S3 are not performed in a fixed sequential order, which may be simultaneously performed, or the sequence of steps S1, S2, and S3 may be adjusted.

Further preferably, in step S2, the optical fiber mounting seat for fixing a single-mode optical fiber assembly and the light through hole are manufactured on a reverse surface of the first substrate through a potassium hydroxide (KOH) etching and dry etching combined process. The optical fiber mounting seat has the function of providing angle guiding and limiting for an optical fiber to ensure that a definite spatial distance exists between an end surface of the optical fiber and a first surface of the inertial mass block after packaging and fixing, ensuring that the optical acceleration sensitive chip and an optical acceleration sensitive chip prepared from packaging the optical fiber have batched consistency. The optical fiber mounting seat also has the function of providing guiding and anti-shearing protection for welding flux and a glass sleeve for protecting the optical fiber.

Further preferably, in step S3, the counterbored hole and the diffusion hole are manufactured in a reverse surface of the third substrate, namely a side, facing away from the second substrate, of the third substrate through the KOH etching and dry etching combined process. The diffusion hole is used for graphically manufacturing a hard mask of an optical anti-reflection film on a second surface of the inertial mass block, and meanwhile eliminating multi-interface reflected light possibly introduced into an F-P optical interference cavity from a third double-surface-polished ultraflat silicon wafer.

Then in step S4, firstly, silicon-silicon wafer bonding is performed on the first substrate, the second substrate, and the third substrate; and then the optical anti-reflection film is deposited on a lower surface, corresponding to the diffusion hole, of the second substrate on a wafer level with the diffusion hole of the third substrate as the hard mask. Since the inertial mass block retains the complete thickness and original surface smoothness and flatness of the double-surface-polished ultraflat silicon wafer, and the refractive index of monocrystalline silicon is approximately 3.4-3.6, which is much higher than that of glass and silicon dioxide, remaining transmitted light of lasers emitted from a second cavity mirror of the F-P optical interference cavity (namely an upper surface of the inertial mass block) is further diverted after passing through an equivalent light path of the thickness of the inertial mass block multiplied by the refractive index of the monocrystalline silicon, which greatly reduces the difficulty of graphically fabricating the optical anti-reflection film on the second surface of the inertial mass block. the wafer-level optical anti-reflection film is deposited finally by adopting a stepped hole of the third double-surface-polished ultraflat silicon wafer after silicon-silicon bonding as the hard mask after silicon-silicon bonding of all the three double-surface-polished ultraflat silicon wafers is completed, and optical anti-reflection films are patterned manufactured on second surfaces of inertial mass blocks of all optical acceleration-sensitive chips manufactured on the wafer in batches. Since the temperature of silicon-silicon bonding exceeds 1,000°C while the temperature resistance of an optical film manufactured from an optical dielectric material is usually only 500°C or above, failure caused by high-temperature damage during silicon-silicon bonding will occur in a case where an optical film is manufactured on a silicon wafer in advance. The bonding intensity and long-term reliability among a plurality of layers of silicon wafer cannot be ensured by adopting a low-temperature gold-silicon bonding process, the overall temperature resistance of the optical acceleration sensitive chip will directly drop to 400°C or below, the packaging temperature at which the welding flux such as glass is packaged is further reduced, and the problems of the packaging reliability and use temperature of the optical acceleration sensitive chip are introduced.

Optical acceleration sensitive chips with high temperature resistance to 500°C or above can be prepared in batches through scribing and cutting after the above steps are completed, and welded fixation with single-mode optical fibers with precisely-ground end surfaces is achieved through low-melting glass at the packaging temperature of 500°C-580°C (glass transition temperature and softening temperature are both not less than 400°C), thereby completing packaging and manufacturing of the optical acceleration sensitive chips. Thus, the optical acceleration sensitive chip can have the wide-temperature-range working capacity at ultralow temperature to high temperature of 400°C or above.

According to the optical acceleration sensitive chip and the manufacturing method thereof in the present application, the MEMS structure and the high-precision optical F-P cavity are integrated and manufactured. Compared with the prior art, SOI silicon wafers are replaced with double-surface-polished ultraflat silicon wafers, which not only significantly reduces the material cost of the sensor, but also reduces coating on the inertial mass block, simplifies the manufacturing process of the sensor, and further saves the production cost of the sensor. The three double-surface-polished ultraflat silicon wafers are adopted. After each silicon wafer is graphically processed, optical acceleration sensitive chips can be manufactured in batches through the silicon-silicon bonding process, which eliminates thermal stress mismatch introduced by heterogeneous aggregation of wafers, reduces the temperature coefficient of the chip, and increases the overall high temperature resistance of the chip to 500°C or above. By adjusting the depths of the upper gap and the lower gap, it is ensured that the optical acceleration sensitive chip has an optimal damping ratio similar to 0.707, thereby effectively suppressing nonlinear phenomena, reducing signal distortion, and helping system maintenance personnel understand signal or channel status. Meanwhile, under high-impact overload, the upper gap and the lower gap can provide limiting protection for the inertial mass block against the irreversible deformation of the beam structure caused by excessive displacement of the inertial mass block. Through the coordination of the stepped hole and the single-mode optical fiber assembly, the parallelism of the two cavity mirrors is ensured, and meanwhile, bonding force between the single-mode optical fiber assembly and the first substrate is improved, preventing the situation that the single-mode optical fiber assembly disengages in application scenarios with great vibration.

### BRIEF DESCRIPTION OF THE DRAWINGS

FIG. 1 is a schematic structural diagram of Embodiment 1 of an optical accelerator sensitive chip according to the present application;
FIG. 2 is a schematic structural diagram of Embodiment 2 of an optical accelerator sensitive chip according to the present application;
FIG. 3 is a schematic structural diagram of Embodiment 3 of an optical accelerator sensitive chip according to the present application; and
FIG. 4 is a flowchart of a method according to the present application.

### Brief description of reference signs:

1-First substrate; 11-optical fiber mounting seat; 12-light through hole; 13-upper gap; 14-first step; 15-second step; 2-second substrate; 21-beam structure; 22-inertial mass block; 3-third substrate; 31-diffusion hole; 32-optical anti-reflection film; 33-light-absorbing material; 34-counterbored hole; 35-lower gap; 4-single-mode optical fiber assembly; 41-glass sleeve; 42-single-mode optical fiber; and 43-solder glass.

### DETAILED DESCRIPTION OF THE EMBODIMENTS

In order to more clearly explain the embodiments of the present disclosure or the technical solutions of the prior art, the drawings needed in the description of the embodiments or the prior art will be briefly described below. Apparently, the drawings in the following description are merely some embodiments of the present disclosure. For those ordinarily skilled in the art, other drawings can be obtained in accordance with these drawings without involving any inventive effort.

For the sake of simplicity of the drawings, the portions relevant to the present disclosure are shown only schematically in the drawings, which do not represent the actual structures thereof as a product. Additionally, in order to simplify the drawings for ease of understanding, components having the same structure or function in some drawings are shown schematically with only one of them, or only one of them is labeled. Herein, "a" means not only "only this one" but also "more than one" case.

It should also be understood that the term "and/or" used in the specification and the appended claims of the present application means any combination of one or more of associated listed items and all possible combinations, and includes these combinations.

Here, it needs to be noted that unless otherwise clearly specified and limited, terms "disposed", "coupled", and "connected" should be broadly understood. For example, the terms may refer to fixed connection, detachable connection or integrated connection; the terms may refer to mechanical connection or electric connection; and the terms may refer to direct connection, indirect connection through an intermediate medium, or communication between interiors of two elements. For a person of ordinary skill in the art, the specific meaning of the above terms in the present disclosure can be understood according to specific circumstances.

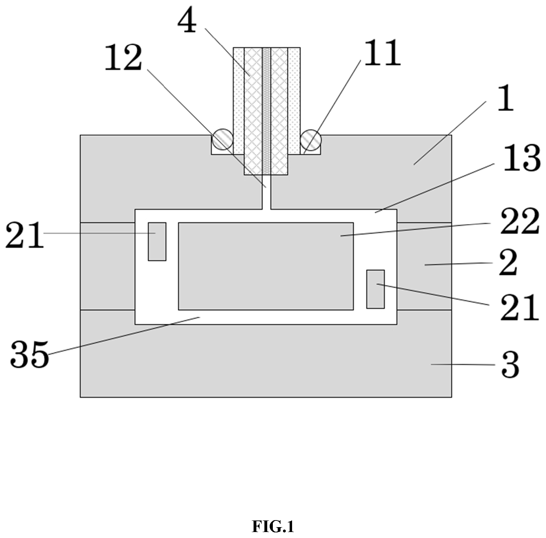

The present application provides a wide-temperature-range high-precision optical acceleration sensitive chip based on a microcavity interferometer principle and a manufacturing method thereof in order to overcome the defects of optical fiber acceleration sensors in the prior art. The wide-temperature-range high-precision optical acceleration sensitive chip includes a first substrate 1, a second substrate 2, and a third substrate 3, specifically as shown in FIG. 1, where an optical fiber mounting seat 11 and a light through hole 12 are processed on the first substrate 1, a beam structure 21 and an inertial mass block 22 are processed on the second substrate 2, the first substrate 1, the second substrate 2, and the third substrate 3 are all double-surface-polished ultraflat silicon wafers, a single-mode optical fiber assembly 4 is fixed to the optical fiber mounting seat 11, an end surface of the single-mode optical fiber assembly 4 is ground precisely and perpendicular to an axial direction of an optical fiber core, a first cavity mirror is formed on an end surface of a side, facing the light through hole 12, of the inertial mass block 22, a second cavity mirror is formed on the end surface of the single-mode optical fiber assembly 4, an F-P interference cavity is formed by the first cavity mirror and the second cavity mirror, and the first substrate 1, the second substrate 2, and the third substrate 3 are connected through a silicon-silicon bonding process. The first cavity mirror is formed on the end surface of the side, facing the light through hole 12, of the inertial mass block 22. By means of the characteristics of good surface smoothness and flatness of the double-surface-polished ultraflat silicon wafers and high optical reflectivity of monocrystalline silicon, the reflectivity of the double-surface-polished ultraflat silicon wafers for lasers of 1,500 nm-1,600 nm exceeds 25%. The double-surface-polished ultraflat silicon wafer is directly adopted as the first cavity mirror of the F-P optical interference cavity, and the end surface of the single-mode optical fiber assembly 4 that is ground precisely and perpendicular to the axial direction of the optical fiber core is adopted as the second cavity mirror of the F-P optical interference cavity. Due to a divergence angle of light signals after leaving the end surface of the single-mode optical fiber assembly 4, after lasers emitted from the second cavity mirror of the F-P optical interference cavity are reflected by the first cavity mirror of the F-P optical interference cavity, only a very small part of the lasers can return to the second cavity mirror of the F-P optical interference cavity along an original path and enter a single-mode optical fiber, ensuring that the two cavity mirrors of the F-P optical interference cavity can be strictly parallel and aligned and ensuring that the first cavity mirror maintains the F-P optical interference cavity in a state where not only are double-beam interference conditions met, but also spectral characteristics such as insertion loss and contrast can always remain approximately constant during large displacement of the inertial mass block 22. To-be-measured acceleration can be converted into inertial displacement of the mass block, so as to change an interference light path between the first cavity mirror and the second cavity mirror of the F-P optical interference cavity, thereby obtaining acceleration information through calculation. The three double-surface-polished ultraflat silicon wafers are adopted. After each silicon wafer is processed through graphical etching, optical acceleration sensitive chips are manufactured in batches through the silicon-silicon bonding process, which eliminates thermal stress mismatch introduced by heterogeneous aggregation of wafers, reduces the temperature coefficient of the chip, and increases the overall high temperature resistance of the chip to 500°C or above. Meanwhile, SOI silicon wafers are replaced with the double-surface-polished ultraflat silicon wafers, material costs of the sensors are significantly reduced, meanwhile, coating on the inertial mass block 22 is reduced, the manufacturing process of the sensors is simplified, and the production cost of the sensors is further reduced.

In a further embodiment, an optical reflecting film is plated on the end surface of the single-mode optical fiber assembly 4 to adjust and control the spectral characteristics of the F-P optical interference cavity. For example, double-beam interference spectral characteristics are improved by plating an optical reflecting film with the reflectivity of 1%-20%. In a further preferred embodiment, the reflectivity of the optical reflecting film is selected to be less than that of surfaces of the second substrate 3, such that two beams of interference light reflected back to the optical fiber by the first cavity mirror and the second cavity mirror have the same light intensities, thereby achieving an optimum double-beam interference effect.

In a further embodiment, the inertial mass block 22 is connected to the second substrate 2 through the beam structure 21, and the beam structure 21 is a double-layer elastic beam. The structure of the double-layer elastic beam may adopt the applicant's previous prior art or other beam structures 21 capable of achieving elastic connection of the inertial mass block 22 in the prior art. The double-layer elastic beam structure 21 includes an upper elastic beam and a lower elastic beam, an upper surface of the upper elastic beam is flush with an upper surface of the second substrate 2, and a lower surface of the lower elastic beam is flush with a lower surface of the second substrate 2. Due to this arrangement, the second substrate is easy to process and achieve, and front and reverse surfaces of the second substrate are both natural surfaces, thereby improving the light path effect. A surface of the beam structure is not treated with processes, the symmetry between beam structures with the same surfaces and beam structures with front and reverse surfaces is improved, and the effect of paraxial suppression is optimized.

In a further preferred embodiment, in order to prevent multi-interface reflected light from influencing the optical performance of the F-P optical interference cavity, an optical anti-reflection film 32 is patterned manufactured on a lower surface of the inertial mass block 22, so as to reduce specular reflection of the inertial mass block and preventing reflected light from the inertial mass block from returning to the F-P optical interference cavity.

In a further preferred embodiment, the first cavity mirror is parallel to the second cavity mirror, and the two beams of interference light reflected back to the optical fiber by the two cavity mirrors of the F-P optical interference cavity have the same light intensities, the respective light intensities thereof are both lower than 5%-20% of an incident light intensity, thereby ensuring that the optical acceleration sensitive chip has good double-beam interference spectral characteristics, and a measurement precision of 1×10⁻⁴ of the change of the interference light path between the first cavity mirror and the second cavity mirror of the F-P optical interference cavity within the chip is achieved based on a laser interference signal demodulation principle. Meanwhile, it is also ensured that the F-P optical interference cavity within the optical acceleration sensitive chip has good stability and transverse vibration interference resistance capacity. Further preferably, according to simulation results, when the two beams of interference light reflected back to the optical fiber by the two cavity mirrors of the F-P optical interference cavity have the same light intensities and the respective light intensities thereof are both lower than 12% of the incident light intensity, good sinusoidal signals are formed by reflected light, demodulation is conveniently performed in subsequent algorithms, and acceleration information can be efficiently obtained through calculation.

In a further preferred embodiment, an upper gap 13 is formed by etching on a surface, facing the second substrate 2, of the first substrate 1, a lower gap 35 is formed by etching on a surface, facing the second substrate 2, of the third substrate 3, and depths of the upper gap 13 and the lower gap 35 are 3 µm-20 µm. By controlling the etching depths of the upper gap 13 and the lower gap 35, damping characteristics of the optical acceleration sensitive chip are adjusted, and limiting protection is provided for the inertial mass block 22, thereby preventing the elastic beam from being broken due to too large displacement of the inertial mass block 22 under the action of high impact. Since the three substrates are subjected to silicon-silicon bonding, there is no need to worry about attraction between the inertial mass block 22 and a surface of the upper gap 13 caused by too small gaps on the basis of ensuring bonding intensity, the depths of the gaps can be freely adjusted accordingly, and it is ensured that the optical acceleration sensitive chip has an optimum damping ratio similar to 0.707, such that nonlinear phenomena are effectively inhibited, signal distortion is reduced, and system maintenance staff are assisted to know signal or channel status. Meanwhile, the upper gap 13 and the lower gap 35 can provide limiting protection for the inertial mass block 22 under high impact overload against irreversible deformation of the beam structure 21 caused by excessive displacement of the inertial mass block 22. The maximum free displacement stroke of the inertial mass block 22 can be set through the upper gap 13 and the lower gap 35 to design and adjust the rigidity of the beam structure 21 accordingly, the measurement sensitivity and dynamic range of the optical acceleration sensitive chip are maximized, and there is no need to worry about breakage of the elastic beam under high impact overload. A specific design parameter is adopted as an example. A first-order natural resonant frequency of an optical acceleration sensitive chip is 16 KHz. Under the action of ±200 g acceleration, the maximum displacement of the inertial mass block 22 is ±0.2 µm, that is, the cavity length corresponding to an F-P optical interference cavity inside the chip is ±0.2 µm. The minimum cavity length of the F-P optical interference cavity that can be measured based on a laser interference signal demodulation principle is 10 pm. Thus, it is ensured that the optical acceleration sensitive chip achieves high resolution of 5×10⁻⁵ of a full scale and linear precision of one ten-thousandth by adopting a laser interference signal demodulation method.

In a further preferred embodiment, the optical fiber mounting seat 11 is a stepped hole with a first step 14 portion and a second step 15 portion. The single-mode optical fiber assembly 4 includes a glass sleeve 41 on an outer layer and a single-mode optical fiber 42 on a core portion, the first step 14 portion, the second step 15 portion, an end surface of the glass sleeve 41, and an end surface of the single-mode optical fiber are all perpendicular to a core shaft of the single-mode optical fiber, the first step 14 portion and the end surface of the glass sleeve 41 are in first fitting, the second step 15 portion and the end surface of the single-mode optical fiber are in second fitting, and the single-mode optical fiber assembly 4 is fixed to the optical fiber mounting seat 11 through solder glass 43. Further preferably, a distance between the end surface of the glass sleeve 41 and the end surface of the single-mode optical fiber 42 is set as a first distance, a distance between the first step 14 portion and the second step 15 portion is set as a second distance, the first distance is less than the second distance, and a difference between the first distance and the second distance is 5-20 µm. By means of the first fitting and the second fitting, the first cavity mirror and the second cavity mirror are maintained strictly parallel, thereby preventing the technical problem that the first cavity mirror and the second cavity mirror are not parallel due to thermal stress caused by temperature change.

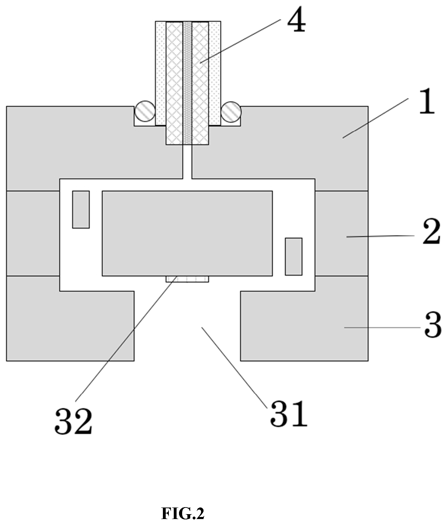

In another embodiment, as shown in FIG. 2, a diffusion hole 31 penetrating through the third substrate 3 is formed in a side, facing away from the second substrate 2, of the third substrate 3, and an optical anti-reflection film 32 is arranged at a position, corresponding to the diffusion hole 31, of the second substrate 2. Therefore, specular reflection of the second substrate is reduced, preventing reflected light from the second substrate from returning to the F-P optical interference cavity.

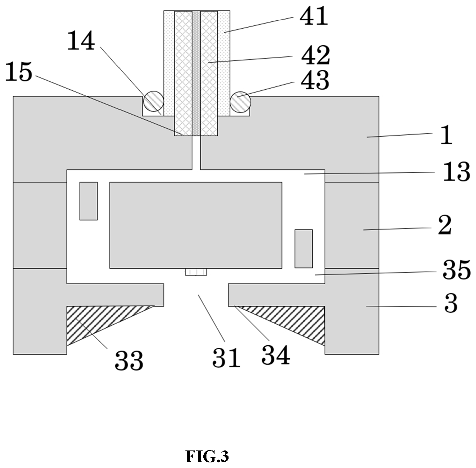

In a further preferred embodiment, as shown in FIG. 3, a counterbored hole 34 is processed in a side, facing away from the second substrate 2, of the third substrate 3, and the diffusion hole 31 penetrating through the third substrate 3 is formed in a bottom of the counterbored hole 34. The optical anti-reflection film 32 is arranged at the position, corresponding to the diffusion hole 31, of the second substrate 2. Therefore, specular reflection of the second substrate is reduced, preventing reflected light from the second substrate from returning to the F-P optical interference cavity, and preventing multi-interface reflected light introduced from the third substrate 3 from influencing the optical performance of the F-P optical interference cavity. Further preferably, a light-absorbing material 33 is arranged in the counterbored hole 34, and covers a bottom wall and a periphery of the counterbored hole 34, further reducing the reflected light. Other equivalent structures may also be arranged for extinction, for example, a plurality of reflecting surfaces are arranged, and the reflected light is directed towards an exterior or a lower portion of the optical acceleration sensor by controlling angles of the reflecting surfaces. The wide-temperature-range high-precision optical acceleration sensitive chip based on the microcavity interferometer principle is based on an F-P interference principle: when three beams of light with wavelengths of λ1, λ2, and λ3 respectively are incident into the acceleration sensor chip, the reflected light returned by the first cavity mirror and the second cavity mirror into the optical fiber can form double-beam interference corresponding to the three wavelengths due to the same intensity and the presence of a light path difference. Under the action of external acceleration or vibration, the relative distance between the first cavity mirror and the second cavity mirror changes, that is, the light path difference between two beams of double-beam interference changes, a phase of the interference light returning to the collimator changes accordingly, thus, the three ways of interference output signals are converted into voltage signals f1, f2, and f3 by a photodiode, and finally information of to-be-measured acceleration is obtained through calculation.

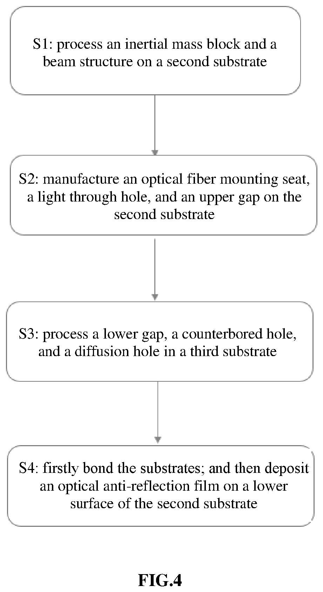

The present application further relates to a manufacturing method of the wide-temperature-range high-precision optical acceleration sensitive chip based on the microcavity interferometer principle, please refer to the flowchart of the method in FIG. 4. The manufacturing method includes the steps; S1. an inertial mass block 22 and a beam structure 21 are formed on a second substrate 2 through a processing process, where the processing process includes photolithography, dry etching, wet etching, or other MEMS micro-nano processing process; S2. an optical fiber mounting seat 11, a light through hole 12, and an upper gap 13 are manufactured on a first substrate 1 through the processing step; and S3. a lower gap 35, a counterbored hole 34, and a diffusion hole 31 are manufactured in a third substrate 3 through the processing process, where the steps S1, S2, and S3 are not performed in a fixed sequential order, which may be simultaneously performed, or the sequence of steps S1, S2, and S3 may be adjusted.

Further preferably, in step S2, the optical fiber mounting seat 11 for fixing a single-mode optical fiber assembly 4 and the light through hole 12 are manufactured on a reverse surface of the first substrate 1 through a KOH etching and dry etching combined process. The optical fiber mounting seat 11 has the function of providing angle guiding and limiting for an optical fiber to ensure that a definite spatial distance exists between an end surface of the optical fiber and a first surface of the inertial mass block 22 after packaging and fixing, ensuring that the optical acceleration sensitive chip and an optical acceleration sensitive chip prepared from packaging the optical fiber have batched consistency. The optical fiber mounting seat 11 also has the function of providing guiding and anti-shearing protection for welding flux and a glass sleeve 41 for protecting the optical fiber.

Further preferably, in step S3, the counterbored hole 34 and the diffusion hole 31 are manufactured in a reverse surface of the third substrate 3, namely a side, facing away from the second substrate 2, of the third substrate through the KOH etching and dry etching combined process. The diffusion hole 31 is used for graphically manufacturing a hard mask of an optical anti-reflection film 32 on a second surface of the inertial mass block 22, and meanwhile eliminating multi-interface reflected light possibly introduced into an F-P optical interference cavity from a third double-surface-polished ultraflat silicon wafer.

Then in step S4, firstly, silicon-silicon wafer bonding is performed on the first substrate 1, the second substrate 2, and the third substrate 3; and then the optical anti-reflection film 32 is deposited on a lower surface of the second substrate 2, namely a position, corresponding to the diffusion hole 31, of the lower surface of the second substrate on a wafer level with the diffusion hole 31 of the third substrate 3 as the hard mask. Since the inertial mass block 22 retains the complete thickness and original surface smoothness and flatness of the double-surface-polished ultraflat silicon wafer, and the refractive index of monocrystalline silicon is approximately 3.4-3.6, which is much higher than that of glass and silicon dioxide, remaining transmitted light of lasers emitted from a second cavity mirror of the F-P optical interference cavity (namely an upper surface of the inertial mass block 22) is further diverted after passing through an equivalent light path of the thickness of the inertial mass block 22 multiplied by the refractive index of the monocrystalline silicon, which greatly reduces the difficulty of graphically fabricating the optical anti-reflection film 32 on the second surface of the inertial mass block 22. is deposited finally by adopting Only after the silicon-silicon bonding of all the three double-surface-polished ultraflat silicon wafers is completed can the wafer-level deposition of the optical anti-reflection film 32 be performed using a stepped hole of the third double-surface-polished ultraflat silicon wafer by silicon-silicon bonding as the hard mask and optical anti-reflection films 32 are patterned manufactured on second surfaces of inertial mass blocks 22 of all optical acceleration-sensitive chips manufactured on the wafer in batches. Since the temperature of silicon-silicon bonding exceeds 1,000°C while the temperature resistance of an optical film manufactured from an optical dielectric material is usually only 500°C or above, failure caused by high-temperature damage during silicon-silicon bonding will occur in a case where an optical film is manufactured on a silicon wafer in advance. The bonding intensity and long-term reliability among a plurality of layers of silicon wafer cannot be ensured by adopting a low-temperature gold-silicon bonding process, the overall temperature resistance of the optical acceleration sensitive chip will directly drop to 400°C or below, the packaging temperature at which the welding flux such as glass is packaged is further reduced, and the problems of the packaging reliability and use temperature of the optical acceleration sensitive chip are introduced.

Optical acceleration sensitive chips with high temperature resistance to 500°C or above can be prepared in batches through scribing and cutting after the above steps are completed, and welded fixation with single-mode optical fibers with precisely-ground end surfaces is achieved through low-melting glass at the packaging temperature of 500°C-580°C (glass transition temperature and softening temperature are both not less than 400°C), thereby completing packaging and manufacturing of the optical acceleration sensitive chips. Thus, the optical acceleration sensitive chip can have the wide-temperature-range working capacity at ultralow temperature to high temperature of 400°C or above.

## Claims

1. A wide-temperature-range high-precision optical acceleration sensitive chip based on a microcavity interferometer principle, comprising a first substrate, a second substrate, and a third substrate, wherein an optical fiber mounting seat and a light through hole are processed in the first substrate; **characterized in that** a beam structure and an inertial mass block are processed on the second substrate, the first substrate, the second substrate, and the third substrate are all double-surface-polished ultraflat silicon wafers, a single-mode optical fiber assembly is fixed to the optical fiber mounting seat, an end surface of the single-mode optical fiber assembly is ground precisely and perpendicular to an axial direction of an optical fiber core, a first cavity mirror is formed on an end surface of a side, facing the light through hole, of the inertial mass block, a second cavity mirror is formed on the end surface of the single-mode optical fiber assembly, an F-P interference cavity is formed by the first cavity mirror and the second cavity mirror, and the first substrate, the second substrate, and the third substrate are connected through a silicon-silicon bonding process.

2. The wide-temperature-range high-precision optical acceleration sensitive chip based on the microcavity interferometer principle according to claim 1, **characterized in that** the inertial mass block is connected to the second substrate through the beam structure, the beam structure is a double-layer elastic beam, the double-layer elastic beam structure comprises an upper elastic beam and a lower elastic beam, an upper surface of the upper elastic beam is flush with an upper surface of the second substrate, and a lower surface of the lower elastic beam is flush with a lower surface of the second substrate.

3. The wide-temperature-range high-precision optical acceleration sensitive chip based on the microcavity interferometer principle according to claim 1 or 2, **characterized in that** a diffusion hole penetrating through the third substrate is formed in a side, facing away from the second substrate, of the third substrate, and an optical anti-reflection film is arranged at a position, corresponding to the diffusion hole, of the second substrate.

4. The wide-temperature-range high-precision optical acceleration sensitive chip based on the microcavity interferometer principle according to claim 1 or 2, **characterized in that** the first cavity mirror is parallel to the second cavity mirror, two beams of interference light reflected back to an optical fiber by the two cavity mirrors of the F-P optical interference cavity have the same light intensities, and the respective light intensities thereof are lower than 5% to 20% of an incident light intensity.

5. The wide-temperature-range high-precision optical acceleration sensitive chip based on the microcavity interferometer principle according to claim 4, **characterized in that** the two beams of interference light reflected back to the optical fiber by the two cavity mirrors of the F-P optical interference cavity have the same light intensities, and the respective light intensities thereof are lower than 20% of the incident light intensity.

6. The wide-temperature-range high-precision optical acceleration sensitive chip based on the microcavity interferometer principle according to claim 1 or 2, **characterized in that** an upper gap is formed by etching on a surface, facing the second substrate, of the first substrate, and a lower gap is formed by etching on a surface, facing the second substrate, of the third substrate.

7. The wide-temperature-range high-precision optical acceleration sensitive chip based on the microcavity interferometer principle according to claim 6, **characterized in that** the optical acceleration sensitive chip has an optimum damping ratio of 0.707 by adjusting a depth of the upper gap and/or the lower gap.

8. The wide-temperature-range high-precision optical acceleration sensitive chip based on the microcavity interferometer principle according to claim 1 or 2, **characterized in that** the optical fiber mounting seat is a stepped hole with a first step portion and a second step portion, the single-mode optical fiber assembly comprises a glass sleeve on an outer layer and a single-mode optical fiber on a core portion, the first step portion, the second step portion, an end surface of the glass sleeve, and the end surface of the single-mode optical fiber are all perpendicular to a core shaft of the single-mode optical fiber, the first step portion and the end surface of the glass sleeve are in first fitting, and the second step portion and the end surface of the single-mode optical fiber are in second fitting.

9. The wide-temperature-range high-precision optical acceleration sensitive chip based on the microcavity interferometer principle according to claim 8, **characterized in that** a distance between the end surface of the glass sleeve and the end surface of the single-mode optical fiber is set as a first distance, a distance between the first step portion and the second step portion is set as a second distance, the first distance is less than the second distance, and a difference between the first distance and the second distance is 5-20 µm.

10. The wide-temperature-range high-precision optical acceleration sensitive chip based on the microcavity interferometer principle according to claim 3, **characterized in that** a counterbored hole is processed in a side, facing away from the second substrate, of the third substrate, and the diffusion hole penetrating through the third substrate is formed in a bottom of the counterbored hole; and a light-absorbing material or equivalent structure is arranged in the counterbored hole, and covers a bottom wall and a periphery of the counterbored hole.

11. The wide-temperature-range high-precision optical acceleration sensitive chip based on the microcavity interferometer principle according to claim 1 or 2, **characterized in that** an optical reflecting film is plated on the end surface of the single-mode optical fiber assembly to regulate and control spectral characteristics of the F-P optical interference cavity, and a reflectivity of the optical reflecting film is less than that of the surfaces of the second substrate.

12. An acceleration sensor of the wide-temperature-range high-precision optical acceleration sensitive chip based on the microcavity interferometer principle according to any one of claims 1-11.

13. A manufacturing method of the wide-temperature-range high-precision optical acceleration sensitive chip based on the microcavity interferometer principle according to any one of claims 1-11, specifically comprising: S1. forming an inertial mass block and a beam structure on a second substrate through a processing process; S2. manufacturing an optical fiber mounting seat, a light through hole, and an upper gap on a first substrate through the processing step; S3. manufacturing a lower gap, a counterbored hole, and a diffusion hole in a third substrate through the processing process, wherein the steps S1, S2, and S3 are not performed in a fixed sequential order; and S4. firstly, performing silicon-silicon wafer bonding on the first substrate, the second substrate, and the third substrate; and then forming an optical anti-reflection film at a position, corresponding to the diffusion hole, of a lower surface of the second substrate with the diffusion hole of the third substrate as a hard mask.

14. The manufacturing method of the wide-temperature-range high-precision optical acceleration sensitive chip based on the microcavity interferometer principle according to claim 13, **characterized in that** in the step S2, the optical fiber mounting seat for fixing a single-mode optical fiber assembly and the light through hole are manufactured on a reverse surface of the first substrate through a KOH etching and dry etching combined process.

15. The manufacturing method of the wide-temperature-range high-precision optical acceleration sensitive chip based on the microcavity interferometer principle according to claim 13 or 14, **characterized in that** in the step S3, the counterbored hole and the diffusion hole are manufactured in a reverse surface of the third substrate through the KOH etching and dry etching combined process.
